# EUROPEAN PATENT SPECIFICATION

(11) **EP 1 761 589 B1**
(45) Date of publication and mention of the grant of the patent: **19.03.2008**
(21) Application number: 05758515.0
(22) Date of filing: 27.05.2005
(51) Int. Cl.: C09D 101/08, C08B 16/00

(54) **CELLULOSE MODEL SURFACE**
CELLULOSEMODELLOBERFLÄCHE
SURFACE D'UN MODELE DE CELLULOSE

(30) Priority: 10.06.2004 WO PCT/IB2004/001976
(43) Date of publication of application: 14.03.2007
(73) Proprietor: FIRMENICH SA, 1211 Genève 8 (CH)
(72) Inventor: VARNOUS, Mahtab, 1009 Pully (CH); VOGEL, Horst, CH-1028 Preverenges (CH); ULRICH, Wolf-Peter, 1125 Monnaz (CH); STORA, Thierry, F-01710 Thoiry (FR); LEUFGEN, Kirsten, 1125 Monnaz (CH); VELAZCO, Maria Inés, CH-1202 Geveve (CH)
(74) Representative: Dale, Gavin Christopher
(86) International application number: PCT/IB2005/001479
(87) International publication number: WO 2005/121226

(56) References cited:
- EP-A- 0 562 378
- REHFELDT FLORIAN ET AL: "Hydration forces in ultrathin films of cellulose" LANGMUIR; LANGMUIR MAR 4 2003, vol. 19, no. 5, 4 March 2003 (2003-03-04), pages 1467-1473, XP002348187
- KONTTURI EERO ET AL: "Cellulose model surfaces-simplified preparation by spin coating and characterization by X-ray photoelectron spectroscopy, infrared spectroscopy, and atomic force microscopy" LANGMUIR; LANGMUIR JUL 8 2003, vol. 19, no. 14, 8 July 2003 (2003-07-08), pages 5735-5741, XP002348188 cited in the application
- KONTTURI E ET AL: "Novel method for preparing cellulose model surfaces by spin coating" POLYMER; POLYMER MAY 30 2003, vol. 44, no. 13, 30 May 2003 (2003-05-30), pages 3621-3625, XP002348189

## Description

### Technical field

The present invention relates to the field of cellulose models. More particularly, it concerns an isotropic cellulose film deposited on a solid support such as an inorganic layer. The present invention concerns also a process to manufacture said cellulose film as well as an analytical cell comprising such deposited film.

Said cellulose film is particularly useful to study the interactions or performances of various chemicals with a cellulose surface, such as cotton.

### Prior art

To study and compare the interactions of various raw materials with natural cellulose fibers, such as cotton, it is expected to be more convenient to use synthetic immobilized cellulose films, which have a more constant and reproducible behavior than the natural fiber.

However, to obtain useful data, it is very important that the cellulose films possess physico-chemical and chemical properties as close as possible to that of the natural fibers in order to closely mimic the interactions of the raw materials with the natural fiber surface and bulk.

The chemical properties of such cellulose films are also of primary importance, as they must enable the model to resist the experimental conditions of the tests.

Deposited cellulose films have been used as models of cotton to study the interactions of the latter with polymers (see Geffroy et al. cited below). In the present case, however, we are interested in the study of the interactions of surfactants, perfumes or detergent or softener compositions with natural cellulose fibers and therefore the deposited cellulose film should be able to resist specific constraints in temperature, pH and polarity change.

Various isotropic cellulose films have been described in the prior art. In particular, Geffroy et al. (Colloids and Surface, 2000, 172, 47) disclose cellulose films deposited on an inorganic layer previously coated with an anchoring polymer, so as to increase the adherence properties between the film and the inorganic layer. Alternatively, Kontturi et al. (Langmuir, 2003, 5735) used as inorganic layer a non-treated (i.e. non-cleaned or not pre-coated) silicon wafer or an untreated gold layer obtained by vapor deposition.

However, said prior art cellulose films have proved to be not enough chemically stable to allow their use as surface model to study the interactions of detergent raw materials with cotton. Some of them are even not able to conveniently mimic the physico-chemical properties of bulk cotton because they are too thin.

### Description of the invention

We have now surprisingly found that it is possible to manufacture, in a reproducible manner, cellulose films having suitable physico-chemical and chemical properties which render them useful models for cellulose based natural fibers, especially when used to study the interactions of such natural fibers with raw materials commonly present in detergent compositions or perfumes.

Indeed, contrary to what is described in the prior art, it has been surprisingly found that it is possible to solve the above-mentioned problems by using, as support of the cellulose films, a specific inorganic layer which is characterized by having a highly clean surface or by having been pre-treated with a low molecular weight ω-hydroxy-thiol instead of a polymer.

Therefore a first object of the present invention is a process for the preparation of an isotropic cellulose film deposited on at least a portion of the surface of an inorganic layer, said process comprising the steps of:
a) spin-coating at least a portion of the surface of said inorganic layer with a trimethylsilylcellulose (TMSC) solution so as to form a deposited TMSC film, and
b) treating the TMSC film with vapors of an acid and of water, to obtain said cellulose film;
and being characterized in that said inorganic layer is:
1) a SiO₂ or Ge layer bound to a support material, and at least a portion of the surface of said layer has been treated, just before use, with an oxygen, air or argon plasma; or
2) a SiO₂ or Ge layer bound to a support material, and said layer has been obtained just before use, using a vapor deposition process; or
3) a Au layer bound to a support material, and said layer has been treated, or coated, just before use, with a C₄₋₂₀ ω-hydroxy-thiol.

The invention's process uses as starting material TMSC which is a known silylated derivative of cellulose, that can be obtained according to Kontturi et al. (Langmuir, 2003, 5735).

In general terms, in the spin coating process, a surface is contacted with a solution of the material to be deposited and is spun at a constant angular velocity. During this process, if the dissolved material has a chemical affinity for the surface greater than the one for the solvent, the dissolved material will deposit on said surface.

As spin coating is well known to a person skilled in the art, it is not necessary here to describe it in many details. However it is here useful to mention that, to obtain particularly useful films, it is preferable to use TMSC solutions having TMSC concentrations comprised between 0.5 and 3.0 % w/w, relative to the weight of the solution, and wherein the solvent is selected from the group consisting of C₅₋₉ alkanes, C₆₋₉ cycloalkanes and C₆₋₁₀ aromatics. Furthermore, one can mention angular velocity comprised between 1000 and 4000 rpm (rounds per minute). Particularly preferred experimental conditions for the spin coating comprise a 0.8 to 2.0 % w/w TMSC solution in cyclohexane or n-hexane and an angular velocity comprised between 2500 and 3000 rpm.

According to a particular embodiment of the invention, the spin coating process is designed in order to allow to obtain a TMSC film having a thickness comprised between 40 and 400 nm.

As anticipated above, the inventions' films are deposited on at least a portion of the surface of an inorganic layer. Typically, said portion represents from 50% to 100%, preferably from 90% to 100%, of said surface.

The inorganic layer is made of a specific material and possesses a surface of any suitable shape, preferably essentially planar. For the purpose of the present invention, it is important that, just before its use in the spin coating step, said surface has been treated in order to obtain a very clean surface or a particular coating.

The inorganic layer is conveniently made of a material selected from the group consisting of SiO₂, Au or Ge and is bound to a support material. Suitable, and non-limiting, examples of said support material are made of Au, Ge, Si, diamond or ZnSe. According to a preferred embodiment of the invention, a Au or Ge layer is associated with a support made of the same material, while a SiO₂ layer is associated with a support made of Ge or Si.

In general, the inorganic layer is a material deposited on the support material, i.e. by a simple vapor deposition process, or alternatively be simply the surface layer of said support material.

As indication, the thickness of the inorganic layer can be comprised between 2 and 20 nm.

According to a particular embodiment of the invention, a preferred inorganic layer is SiO₂.

The inorganic layer according to the invention is characterised by a specific treatment of its surface in order to increase the adherence properties and allow the formation of a cellulose layer of sufficient chemical stability.

The nature of said treatment depends on the material of which the layer is made.

For instance, we have found that a SiO₂ or Ge layer which is essentially devoid of impurity is highly suitable for the invention's purpose. Such SiO₂ or Ge layer can be obtained either by treating the surface of a Si wafer or Ge crystal with a plasma or by deposition of SiO₂ or Ge vapor on a support material.

Suitable plasmas are the oxygen, air or argon ones. However, according to a particular embodiment of the invention, the oxygen or air plasmas are preferred. The plasma treatment, by way of example, comprises submitting the inorganic layer to the plasma for 5 to 15 minutes at a pressure of about 3-9 10⁻² mbar.

The vapor deposition technique is well known by a person skilled in the art and does not need to be described in details.

Alternatively, another inorganic layer having the desired adherence properties, and being also useful for the intended use, can be obtained by treating an Au layer so as to deposit on its surface a self-assembled layer consisting of a C₄₋₂₀ ω-hydroxy-thiol, the molecular weight of which may be usefully comprised between 90 to 400 g/mol. Indeed we have found that, to the contrary of the prior art, low molecular weight molecules having free hydroxy groups are able to increase the adherence of the cellulose on a surface.

To the best of our knowledge, to increase the bonding interactions of cellulose with an Au layer, the prior art suggested, or disclosed, the possibility of deposing a polymer between said inorganic layer and the cellulose. However the presence of such polymer is recognised in the prior art as being problematic if the cellulose model is used for recording analytical spectra, especially with ATR-IR techniques (see Kontturi *et al*.). The use of low molecular weight ω-hydroxy-thiol provides a useful solution, as it will produce much smaller interference within the recorded spectrum.

According to a particular embodiment of the invention, particularly suitable ω-hydroxy-thiols contain a C₈-C₁₄ alkyl chain, preferably linear. More particularly one can cite ω-hydroxyundecanethiols.

As described above, in the last step of the invention's process, the TMSC-based film is converted into the corresponding cellulose-based film by treating the former with vapors of an acid and of water. This step is also well known to a person skilled in the art. However it is here useful to mention that, to obtain particularly useful films, it is preferable to use concentrated HCl as source of the acid and water vapors.

The isotropic film of cellulose deposited on at least a portion of the surface of an inorganic layer, obtainable by a process as described above, is also a new and useful tool for analytical purposes. Therefore said films are another object of the present invention. The invention's films differentiate from the prior art cellulose films by their enhanced chemical stability, i.e. the adherence of the film on the inorganic layer, especially in the presence of surfactants and perfumes.

It is understood that it is possible to obtain a film by repeating several times step a) and/or b) of the invention's process so as to obtain a film of desired thickness.

According to a preferred embodiment of the invention, said deposited cellulose films are also characterized by a film thickness comprised between 20 and 300 nm. More preferably, the films have a thickness comprised between 50 and 200 nm. By "thickness" we mean here a thickness as measured at ambient humidity comprised between 35 and 70%.

For sake of clarity, it is here useful to mention that, when there is mentioned a "isotropic cellulose film", in fact it is meant a cellulose film wherein the isotropic fraction represents more than 80 %, preferably more than 95 %, of the total cellulose, i.e. of the sum of the isotropic cellulose and of the crystalline or anisotropic cellulose.

Contact angles of water with the deposited cellulose films can range from 24° to 40°, preferentially between 27° and 35°.

All the above-mentioned ranges of thickness and isotropy allows the invention's deposited film to mimic in a reasonable manner the physico-chemical behaviors of a cellulose natural fiber such as cotton.

The invention's films have proved to be sufficiently chemically stable in the conditions used to study the interactions of surfactants, perfumes or detergent or softener compositions with cellulose. In particular, said films are not degraded (i.e. the cellulose film remains bonded to the inorganic layer) when exposed for 60 minutes at 60°C to an aqueous solution of 2% (w/v) sodium dodecyl sulfate at pH 6.6

Yet a further object of the present invention is an analytical cell, comprising a deposited cellulose film according to the invention, and which is adapted for one or more analytical techniques. According to a preferred embodiment of the invention, the cell is of the type "flow cell" and is adapted for analytical techniques such as ATR-FTIR (attenuated total reflectance Fourier transform infrared spectroscopy), TIRF (total internal reflectance fluorescence spectroscopy), SPR (surface plasmon resonance) or QCM (quartz crystal microbalance).

As non-limiting example, an invention's flow cell, e.g. adapted for ATR-FTIR analysis, will comprise:
I) a material that is transparent for the wavelength of light used for the analysis (1), examples are a germanium, a silicon, diamond or a zinc selenide plate;
II) an invention's deposited cellulose film (2), the support material being in contact with said crystal;
III) one or more gaskets (3), made of a chemically inert material, being positioned around and optionally in contact with said film, said gasket being also higher than the film deposited; and
IV) a body (4) made of a suitable (inert) material, such as PMMA, stainless steel, Teflon, glass or combinations of these materials, said body including at least one inlet (5) and at least one outlet port (6) for connection to an external element capable of supplying the chemical raw materials to be studied when interacting with the invention cellulose film; and
said body being positioned on the top of said gasket so as to form a cavity between the surface of the cellulose film, the body and the gasket, said cavity being also in connection with the inlet and outlet ports of the body.

The cavity of the flow cell is the place where takes place the contact between the chemical raw materials to be studied, the latter being supplied for examples as a water solution or suspension. Typically the size of the cavity of the flow cell is of the order of 40-100 µl so as to facilitate rapid exchange of solutions and little consumption of costly or rare materials.

Examples of suitable gaskets are the material known as Kalrez^{®} (origin: DuPont), Teflon^{®} or Chemraz^{®} (Green Tweed).

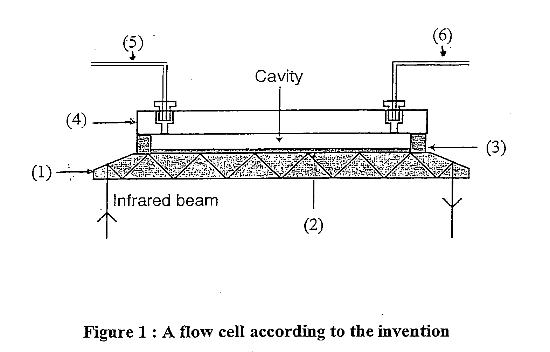

An example of an invention's flow cell is described in Figure 1.

As previously disclosed, the invention's films and/or cells are useful analytical tools which can assist a person skilled in the art in studying the interactions between various raw materials and a cellulose surface so as to optimize the formulation of active compositions. Therefore a further object of the invention is a use of the above-mentioned deposited films and/or cells to quantify the interactions between various raw materials and a cellulose surface. Examples of suitable raw materials are surfactants, perfuming ingredients and mixture thereof.

The invention will now be described in further detail by way of the following examples, wherein the abbreviations have the usual meaning in the art, the temperatures are indicated in degrees centigrade (°C).

### Example 1

### Preparation of a deposited film according to the invention

An ATR plate (60 × 10 × 4 mm) made of germanium was used as support. The plate was cleaned with Hellmanex 2% (vol/vol), and then washed intensively with MilliQ water and finally rinsed with methanol. The plate was activated in an oxygen plasma just before film deposition. The plate was coated at an angular velocity of 2500 rpm for 7 s using a TMSC solution in cyclohexane having a concentrations of 0.8% or 2.0%. There was thus obtained a deposited TMSC film which was subsequently conserved in the final deposited cellulose film by incubating it for 2 minutes in a dessicator over a concentrated solution of HCl (37%). There was thus obtained a deposited cellulose film according to the invention and having a thickness of 20 nm (if there was used a 0.8% TMSC solution) or 200 nm (if there was used a 2.0% TMSC solution). Water contact angles of the cellulose films were around 24° and 35° respectively. AFM imaging of the 200 nm cellulose film revealed a very smooth surface with a rms roughness of 1.4 nm.

### Example 2

### Preparation of an analytical cell according to the invention

The cell is assembled as schematically shown in Figure 1: A chemically inert gasket (in this case made of a perfluorinated rubber) is placed on top of an ATR plate made of a germanium crystal supporting a cellulose film (the support material being in contact with the surface of the plate). The ATR plate supporting the gasket is then mounted on the cell body (comprising an inlet and an outlet) to form watertight seals. The cavity is entirely defined by the gasket and thus easily adaptable. The assembly is placed in a suitable ATR setup that directs the IR radiation in and out of the ATR plate. The cavity is rinsed with water for 1 hour through the connected tubing and left overnight filled with water to ensure equilibration of the cellulose layer. The ATR setup is placed in the sample chamber of a Fourier transform infrared spectrometer (IFS 66, Bruker) equipped with a globar source and a MCT detector. The spectrometer and the ATR set-up were continuously purged with dry and CO₂-free air to remove water vapor and CO₂.

### Example 3

### Method of screening raw materials performances using a cell according to the invention

### Preparation of sample solution

5 g of dioctadecyl dimethylammonium chloride (DODAC) pellets were added to 95 g water at 70 °C. Once DODAC pellets were melted, the DODAC/water mixture was mixed using a mechanical mixer at 70 °C for 10 min. The mixture was then kept at 70°C for 20 minutes without mixing, so that it was obtained a "low shear solution". 0.5% (w/v) of perfume was added to the "low shear solution" and the resulting mixture was sheared with an ultra-turrax for 5 minutes and consecutively sonified for 10 minutes with a tip-sonifier, so that it was obtained a "high shear solution". The "high shear solution" was diluted 10 times with deionized water and stored at room temperature for further use. Directly before use, the solution was sonified for a few minutes in a bath sonifier. The solution had a pH of about 7.7.

### General method of screening

The sample cell was mounted as described in Example 2. Solutions were handled by a computer controlled piston pump station (Hamilton M-500) enabling rapid exchange of the cell volume. A reference spectrum (500 scans) of the cellulose incubated in water was taken directly before contacting the sample solution with the cellulose film. During the adsorption (desorption) process of the perfume/surfactant system on (from) the cellulose film, spectra were recorded subsequently every 4 s during 4 minutes and then every 16 s for 1 hour. All spectra were taken at a resolution of 4 cm⁻¹. The spectra were corrected for baseline, atmospheric water vapor and water bands. An integrated software package (OPUS, Bruker) was used to calculate the integrated absorbance for characteristic IR bands of surfactant and perfume.

It was thus possible to investigate the interactions of several (e.g. 5) perfuming ingredient/surfactants systems with one single cellulose film.

## Claims

1. A process for the preparation of an isotropic cellulose film deposited on at least a portion of the surface of an inorganic layer, said process comprising the steps of:
a) spin-coating at least a portion of the surface of said inorganic layer with a trimethylsilylcellulose (TMSC) solution so as to form a deposited TMSC film, and
b) treating the TMSC film with vapors of an acid and of water, to obtain said cellulose film;
and being **characterized in that** said inorganic layer is:
1) a SiO₂ or Ge layer bound to a support material, and at least a portion of the surface of said layer has been treated, just before use, with an oxygen, air or argon plasma; or
2) a SiO₂ or Ge layer bound to a support material, and said layer has been obtained just before use, using a vapor deposition process; or
3) a Au layer bound to a support material, and said layer has been treated, or coated, just before use, with a C₄₋₂₀ ω-hydroxy-thiol.

2. A process according to claim 1, **characterised in that** said support material is made of Au, Ge, Si, diamond or ZnSe.

3. A process according to claim 2, **characterized in that** a Au or Ge layer is associated with a support made of the same material, or a SiO₂ layer is associated with a support made of Ge or Si.

4. A process according to claim 1, **characterized in that** the plasma is an oxygen or air plasma.

5. A process according to claim 1, **characterized in that** the Au layer is treated with a ω-hydroxy-thiol containing a C₈-C₁₄ alkyl chain.

6. An isotropic cellulose film obtainable by a process according to any one of claims 1 to 5.

7. An isotropic cellulose according to claim 6, **characterized by** a cellulose film thickness comprised between 20 and 300 nm.

8. An isotropic cellulose according to claim 6, **characterized by** a contact angle of water with the cellulose comprised between 24° to 40°.

9. An analytical cell comprising a deposited cellulose film according to any one of claims 6 to 8.

10. An analytical cell according to claim 9, in the form of an ATR-FTIR, TIRF, SPR or QCM flow cell.

11. An analytical cell according to claim 10, comprising:
I) a material that is transparent for the wavelength of light used for the analysis;
II) a deposited cellulose film according to any one of claims 6 to 8, the support material being in contact with said crystal;
III) one or more gaskets, made of a chemically inert material, being positioned around and optionally in contact with said film, said gasket being also higher than the film deposited; and
IV) a body made of a suitable material, said body including at least one inlet and at least one outlet port for connection to an external element capable of supplying the chemical raw materials to be studied when interacting with the invention cellulose film; and
said body being positioned on the top of said gasket so as to form a cavity between the surface of the cellulose film, the body and the gasket, said cavity being also in connection with the inlet and outlet ports of the body.

12. Use of an isotropic film according to claim 6 or of a cell according to claim 9 to quantify the interactions between a raw material and a cellulose surface.

13. Use according to claim 11, **characterized in that** said raw material is a surfactant, a perfuming ingredient or a mixture thereof.

## Patentansprüche

1. Verfahren für die Herstellung eines isotropen Cellulosefilms, abgeschieden auf zumindest einem Teil der Oberfläche einer anorganischen Schicht, wobei das Verfahren die Schritte umfaßt:
a) Schleuderbeschichten von zumindest einem Teil der Oberfläche der anorganischen Schicht mit einer Trimethylsilylcellulose-(TMSC)-Lösung, um einen abgeschiedenen TMSC-Film zu erzeugen, und
b) Behandeln des TMSC-Films mit Dämpfen von einer Säure und von Wasser, um den Cellulosefilm zu erhalten;
und **dadurch gekennzeichnet, daß** die anorganische Schicht ist:
1) eine SiO₂- oder Ge-Schicht, gebunden an ein Trägermaterial, und zumindest ein Teil der Oberfläche der Schicht ist, unmittelbar vor Gebrauch, mit einem Sauerstoff-, Luft- oder Argonplasma behandelt worden; oder
2) eine SiO₂- oder Ge-Schicht, gebunden an ein Trägermaterial, und die Schicht ist, unmittelbar vor Gebrauch, unter Verwendung eines Dampfabscheidungsverfahrens erhalten worden; oder
3) eine Au-Schicht, gebunden an ein Trägermaterial, und die Schicht ist, unmittelbar vor Gebrauch, mit einem C₄₋₂₀-ω-Hydroxythiol behandelt oder beschichtet worden.

2. Verfahren nach Anspruch 1, **dadurch gekennzeichnet, daß** das Trägermaterial aus Au, Ge, Si, Diamant oder ZnSe hergestellt ist.

3. Verfahren nach Anspruch 2, **dadurch gekennzeichnet, daß** eine Au- oder Ge-Schicht mit einem Träger, hergestellt aus dem gleichen Material, verbunden ist oder eine SiO₂-Schicht mit einem Träger, hergestellt aus Ge oder Si, verbunden ist.

4. Verfahren nach Anspruch 1, **dadurch gekennzeichnet, daß** das Plasma ein Sauerstoff- oder Luftplasma ist.

5. Verfahren nach Anspruch 1, **dadurch gekennzeichnet, daß** die Au-Schicht mit einem ω -Hydroxythiol, enthaltend eine C₈-C₁₄-Alkylkette, behandelt wird.

6. Isotroper Cellulosefilm, erhältlich durch ein Verfahren nach einem der Ansprüche 1 bis 5.

7. Isotrope Cellulose nach Anspruch 6, **gekennzeichnet durch** eine Cellulosefilmdicke zwischen 20 und 300 nm.

8. Isotrope Cellulose nach Anspruch 6, **gekennzeichnet durch** einen Kontaktwinkel von Wasser mit der Cellulose zwischen 24° bis 40°.

9. Analytische Zelle, umfassend einen abgeschiedenen Cellulosefilm nach einem der Ansprüche 6 bis 8.

10. Analytische Zelle nach Anspruch 9 in der Form einer ATR-FTIR-, TIRF-, SPR- oder QCM-Fließzelle.

11. Analytische Zelle nach Anspruch 10, umfassend:
I) ein Material, das für die Wellenlänge von Licht, verwendet für die Analyse, transparent ist;
II) einen abgeschiedenen Cellulosefilm nach einem der Ansprüche 6 bis 8, wobei das Trägermaterial in Kontakt mit dem Kristall ist;
III) eine oder mehrere Dichtungen, hergestellt aus einem chemisch inerten Material, die um den Film herum und gegebenenfalls in Kontakt mit ihm positioniert sind, wobei die Dichtung auch höher als der abgeschiedene Film ist; und
IV) einen Körper, hergestellt aus einem geeigneten Material, wobei der Körper mindestens eine Einlaß- und mindestens eine Auslaßöffnung zur Verbindung mit einem äußeren Element einschließt, das imstande ist, die zu untersuchenden chemischen Rohmaterialien, wenn wechselwirkend mit dem Cellulosefilm der Erfindung, zuzuführen; und
wobei der Körper oben auf der Dichtung positioniert wird, um eine Höhlung zwischen der Oberfläche des Cellulosefilms, dem Körper und der Dichtung zu erzeugen, wobei die Höhlung auch in Verbindung mit der Einlaß- und Auslaßöffnung des Körpers ist.

12. Verwendung eines isotropen Films nach Anspruch 6 oder einer Zelle nach Anspruch 9, um die Wechselwirkungen zwischen einem Rohmaterial und einer Celluloseoberfläche zu quantifizieren.

13. Verwendung nach Anspruch 11, **dadurch gekennzeichnet, daß** das Rohmaterial ein Tensid, ein parfümierender Bestandteil oder ein Gemisch davon ist.

## Revendications

1. Procédé de préparation d'un film de cellulose isotrope déposé sur au moins une portion de la surface d'une couche inorganique, ledit procédé comprenant les étapes suivantes:
a) dépôt à la tournette d'une solution de triméthylsilylcellulose (TMSC) sur au moins une portion de la surface de ladite couche inorganique de façon à former un film de TMSC déposé, et
b) traitement du film de TMSC par des vapeurs d'un acide et d'eau pour obtenir ledit film de cellulose;
le procédé étant **caractérisé en ce que** ladite couche inorganique est:
1) une couche de SiO₂ ou de Ge liée à un matériau de support, au moins une portion de la surface de ladite couche ayant été traitée, juste avant l'utilisation, par un plasma d'oxygène, d'air ou d'argon; ou
2) une couche de SiO₂ ou de Ge liée à un matériau de support, ladite couche ayant été obtenue, juste avant l'utilisation, par un procédé de déposition par phase vapeur; ou
3) une couche d'Au liée à un matériau de support, ladite couche ayant été traitée ou revêtue, juste avant l'utilisation, par un ω-hydroxy-thiol en C₄₋₂₀.

2. Procédé selon la revendication 1, **caractérisé en ce que** ledit matériau de support est composé d'Au, de Ge, de Si, de diamant ou de ZnSe.

3. Procédé selon la revendication 2, **caractérisé en ce qu'**une couche d'Au ou de Ge est associée à un support composé du même matériau, ou une couche de SiO₂ est associée à un support composé de Ge ou Si.

4. Procédé selon la revendication 1, **caractérisé en ce que** ledit plasma est un plasma d'oxygène ou d'air.

5. Procédé selon la revendication 1, **caractérisé en ce que** la couche d'Au est traitée par un ω-hydroxy-thiol qui contient une chaîne alkyle en C₈-C₁₄.

6. Film de cellulose isotrope qui peut être obtenu par un procédé selon l'une quelconque des revendications 1 à 5.

7. Cellulose isotrope selon la revendication 6, **caractérisée en ce que** l'épaisseur du film de cellulose est comprise entre 20 et 300 nm.

8. Cellulose isotrope selon la revendication 6, **caractérisée en ce que** l'angle de contact entre l'eau et la cellulose est compris entre 24 ° et 40 °.

9. Cuve analytique comprenant un film de cellulose déposé selon l'une quelconque des revendications 6 à 8.

10. Cuve analytique selon la revendication 9, sous la forme d'une cuve à circulation pour spectroscopie ATR-FTIR, microscopie TIRF, spectroscopie SPR ou analyse en QCM.

11. Cuve analytique selon la revendication 10, qui comprend:
I) un matériau qui est transparent à la longueur d'onde lumineuse utilisée pour effectuer l'analyse;
II) un film de cellulose déposé selon l'une quelconque des revendications 6 à 8, le matériau de support étant en contact avec ledit cristal;
III) une ou plusieurs garnitures composée(s) d'un matériau chimiquement inerte et disposées autour et optionnellement en contact avec ledit film, ladite garniture étant également plus haute que le film déposé; et
IV) un corps composé d'un matériau approprié, ledit corps comprenant au moins un orifice d'entrée et au moins un orifice de sortie permettant la connexion à un élément externe capable d'amener les matériaux chimiques bruts à étudier lors de l'interaction avec le film de cellulose de l'invention; et
ledit corps étant positionné au sommet de ladite garniture de façon à former une cavité entre la surface du film de cellulose, le corps et la garniture, ladite cavité étant également en connexion avec les orifices d'entrée et de sortie du corps.

12. Utilisation d'un film isotrope selon la revendication 6 ou d'une cuve selon la revendication 9 pour quantifier les interactions entre un matériau brut et une surface de cellulose.

13. Utilisation selon la revendication 11, **caractérisée en ce que** ledit matériau brut est un surfactant, un ingrédient parfumant ou un mélange des deux.
